# EUROPEAN PATENT APPLICATION

(11) **EP 2 811 666 A1**
(43) Date of publication of application: **10.12.2014**
(21) Application number: 13170509.7
(22) Date of filing: 04.06.2013
(51) Int. Cl.: H04B 10/079, H04B 10/27, H04B 10/293, H04J 14/02

(54) **An optical network as a single managed entity.**

(71) Applicant: Intune Networks Limited, 12 Dublin (IE)
(72) Inventor: Shields, James A., Carrickfergus, Antrim BT389NS (GB); Farrell, Tom, Co. Dublin (IE); Curran, James, Dublin, 18 (IE)
(74) Representative: Roche, Dermot

(57) **Abstract**

The present invention provides a method for adjusting an operating parameter of a node in an optical network which comprises a plurality of nodes, the method comprising the steps of: measuring at the node a value of at least one characteristic associated with the operating parameter of the node; distributing the value of the characteristic to all of the other nodes in the network; receiving at the node the value of the characteristic for all of the other nodes in the network; deriving at the node optical impairment data for each link of the network based on the received values of the characteristic for all of the nodes; calculating at the node the preferred value of the operating parameter for each node based on the derived optical impairment data ; and adjusting the operating parameter of the node based on the calculated preferred value for the node.

## Description

### Field of the Invention

The present invention relates to an optical network. More particularly, the present invention is related to an optical network comprising a distributed management system for managing the operating parameters of the nodes on the network.

### Background to the Invention

Conventionally, the operating parameters of the nodes on an optical network may be managed by a centralised entity. This entity receives data regarding all of the nodes on the optical network, and then determines from this data the preferred operating parameters for each of the nodes. These parameters are then transmitted by the centralised entity to each of the nodes, and the nodes adjust their operating parameters accordingly.

One disadvantage of this centralized management approach is that if there is an operating failure at the centralised entity, the whole network is compromised. In addition, the application of local adjustments from the central entity is difficult to coordinate across the network. This can lead to some adjustments being made on some nodes while not being made on others. A large number of optical paths can be effected by incorrect power distribution resulting from local adjustments being mismatched across the network. While centralisation ensures that the calculated adjustment levels are consistent across the network, it is prone to errors in the execution of those adjustments, particularly in the presence of communication failures between some elements of the network and the central manager.

An alternative approach to the management of operating parameters of nodes on an optical network is a localised approach. In this approach, each node determines its preferred operating parameters in isolation. This means that the determination of the preferred operating parameters for a node is based only on data related to the node itself. However, this approach suffers from the disadvantage that each node makes its determination without knowledge of any factors external to the node which could influence the preferred operating parameters of the node.

### Object of the Invention

The object of the present invention is to provide an improved method of managing the operating parameters of the nodes of an optical network, which at least partially overcomes at least one of the above mentioned problems associated with the prior art.

### Summary of the Invention

The present invention provides a method for adjusting an operating parameter of a node in an optical network which comprises a plurality of nodes, the method comprising the steps of:
measuring at the node a value of at least one characteristic associated with the operating parameter of the node;
distributing the value of the characteristic to all of the other nodes in the network;
receiving at the node the value of the characteristic for all of the other nodes in the network;
deriving at the node optical impairment data for each link of the network based on the received values of the characteristic for all of the nodes;
calculating at the node the preferred value of the operating parameter for each node based on the derived optical impairment data; and
adjusting the operating parameter of the node based on the calculated preferred value for the node.

The method may further comprise the step of only adjusting the operating parameter of the node provided the preferred values of the operating parameters for all of the nodes on the network calculated by each node correlate.

The method may further comprise the steps of:
establishing at the node the topology of the network, and
determining whether the preferred values of the operating parameters for all of the nodes in the network calculated by each node correlate through the use of the established network topology.

The step of distributing the value of the characteristic to all of the other nodes in the network may comprise the step of transmitting a broadcast message including this value over the control channel of the optical network.

The step of receiving at the node the value of the characteristic for all of the other nodes in the network may comprise the step of receiving over the control channel a broadcast message from each node in the network, the broadcast message containing the value of the characteristic.

The operating parameter may be the output power.

The characteristic associated with the output power may be the received power at the node.

The step of deriving at the node optical impairment data for each link of the network may comprise calculating the power loss of each link of the network.

The method may further comprise storing locally at each node the power loss for each link of the network.

The preferred value of the operating parameter for each node may be calculated using the same algorithm at each node in the network.

The preferred value of the output power for each node may be based on an algorithm whereby the sum of the values by which the optical attenuators of all of the nodes are to be adjusted times the gain is equal to the total power loss of each link in the network

The calculation at the node of the preferred value of the output power for each node may compensate for dispersion and maximises the signal to noise ratio in the optical network.

The adjustment in the output power may comprise an adjustment in the common mode output power of the optical data channels.

The method may further comprise the initial step of auto provisioning the control channel of the optical network prior to measuring the value of the characteristic associated with the operating parameter of the node.

The method may be executed periodically to maintain the optical configuration or performance of the network.

Alternatively, the method may be executed continuously to maintain the optical configuration or performance of the network.

The present invention also provides an apparatus for adjusting the operating parameter of a node in an optical network which comprises a plurality of nodes, the apparatus comprising:
means for measuring at the node a value of at least one characteristic associated with the operating parameter of the node;
means for distributing the value of the characteristic to all of the other nodes in the network;
means for receiving at the node the value of the characteristic for all of the other nodes in the network;
means for deriving at the node optical impairment data for each link of the network based on the received values of the characteristic for all of the nodes;
means for calculating at the node the preferred value of the operating parameter for each node based on the derived optical impairment data; and
means for adjusting the operating parameter of the node based on the calculated preferred value for the node.

### Brief Description of the Drawings

Figure 1 is a block diagram of a typical network node showing its external interfaces;
Figure 2 is a block diagram of the typical functional components which comprise a first form of node;
Figure 3 is a block diagram of the typical functional components which comprise a second form of node;
Figure 4 is a more detailed block diagram of the control plane of the node of Figures 2 or 3;
Figure 5 shows a simple unidirectional ring of nodes of an exemplary network; and
Figure 6 shows the main steps in the process flow of the present invention.

### Detailed Description of the Drawings

The present invention will now be described with reference to the embodiments shown in the accompanying figures.

An optical network comprises a plurality of nodes interconnected by an optical fibre, wherein data is transmitted over the fibre in the form of light signals of different wavelengths. The network may be a mesh network or a ring network. Each network may also be divided into a plurality of separate smaller networks.

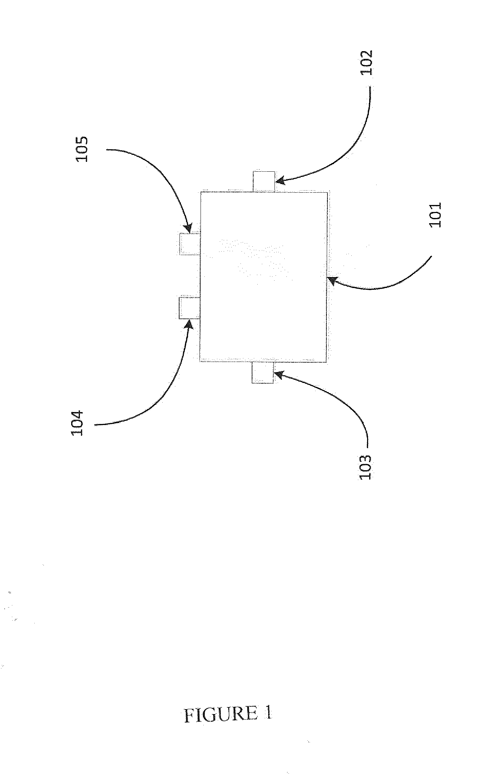

A typical node of an optical network is described with reference to figure 1. The node, 101, comprises at least one fibre input port 103, one fibre output port, 102, one client input port, 104 and one client output port 105. The client ports may be network service ports such as, but not limited to, Sonet, SDH, Ethernet or Fibre channel. The client ports may be optical or electrical formatted ports. Internally, client traffic entering the node 101 is mapped to an optical channel for transmission onto the network to a node that carries the destination client port for the client traffic.

When a single fibre input and fibre output is provided, a set of nodes will provide a unidirectional ring network. When two fibre input and output ports are provided, a set of nodes may be used to create a dual fibre ring. When more than two fibre input port and fibre output ports are provided, the node 101 can be used to construct a mesh network.

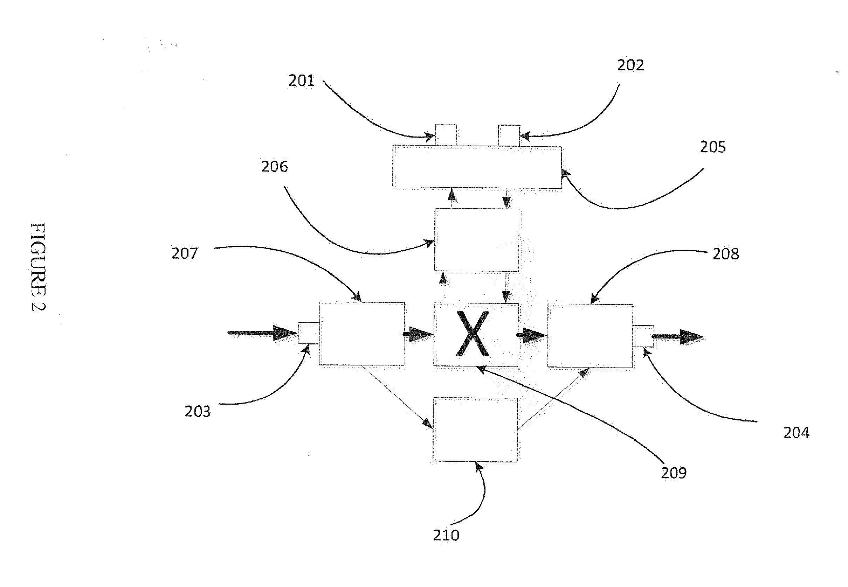

Block diagrams of the functional components which comprise two typical forms of nodes will now be described. The first form is described with reference to figure 2, where the client input port 201 and client output port 202 , and the fibre input port 203 and fibre output port 204 are shown. The client ports connect to a service mapping block 205. This block is responsible for taking the client service format and placing it into a frame that can be used to modulate a laser (not shown) inside at least one transponder 206 to which it is connected. One means of performing this would be to take Ethernet frames from the client port, map these into concatenated STS1 frames using the Generic Framing Procedure (GFP), place this into the payload of an OC192 (Optical Carrier Rate 192) and use this to modulate the laser within the transponder 206 for further transmission onto an optical switch fabric 209. The receive direction would carry out the reverse procedure. Another means of performing this would be to take the Ethernet frames from the client ports, identify the network address, and then map this to an optical client port address. The laser should then be rapidly tuned in the transponder 206 to the optical channel of the destination client port, the frame placed in an optical burst frame, and the laser then modulated with the burst. The receive direction would emit a stream of bursts from diverse sources around the network, remove the burst frames and transmit the Ethernet frames to the receive client port 201.

It should be noted that the node has an all optical data plane below the transponder 206. The client data enters this all optical domain through the optical switch fabric, 209. This switch 209 adds optical control and data channels to the optical fibre port 204, from the transponder 206 on the node 101. The switch 209 also drops control and data channels from fibre input port 203 to transponder 206. Furthermore, the switch 209 passes optical channels not destined for termination on the node 101 from the optical fibre input port 203 to the optical fibre output port 204. One embodiment of the optical switch fabric 209 is a wavelength selective switch based on MEMs technology.

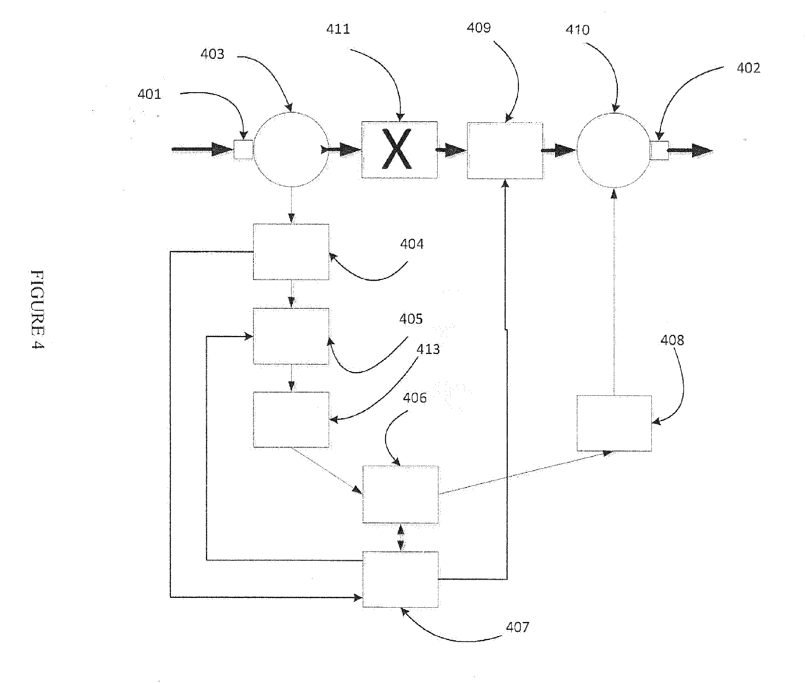

The control and data channels received on the fibre port input connection, 203are first passed through an input optical amplification control and measurement block 207 before being received by the optical switch fabric, 209. This block comprises components such as optical amplifiers, splitters, combiners, filters and photodiodes arranged such that optical parameters of the received control and data channels may be measured. These components will be described later in further detail with respect to Figure 4. A similar block 208 is provided between the optical switch fabric 209 and the output fibre port 204. The control, amplification and measurement block also provides variable optical attenuators that may be operated on a bulk fibre port basis, and/or on a per optical channel basis. These optical attenuators are used throughout the network of nodes to control power distribution across the network.

The node 101 also is provided with a control and communications block 210, which is coupled to the optical amplification control and measurement blocks 207 and 208. This block uses an optical channel which is separate to the set of channels used to provide client interconnection. This optical channel has the property of being capable of autoprovisioning. This means that when a fibre output port on one node is connected to a fibre input port on another node, the optical control channel may be automatically provisioned and a communication channel generated between the two nodes by means of the optical channel. The control block 210 then uses the generated optical control channel to peer with the adjacent node across the optical link. This peering involves the nodes at each end of a link exchanging link state information between them. This information is then flooded from the node through all of the control channel links in the network. A node receiving link state messages matches link end points between the messages to construct a graph of the network topology. A number of protocols may be used to achieve this topology discovery, examples of which are OPSF and IS-IS. It will be understood that the topology discovery operates over physical links created by the autoprovisioning of the optical control channel across the links and is facilitated by means of the control block 210. The present invention uses the topology information determined at each node along with other optical measurements taken at the nodes in the process of locally adjusting the operating parameters of the nodes on the network, as will be explained in further detail later.

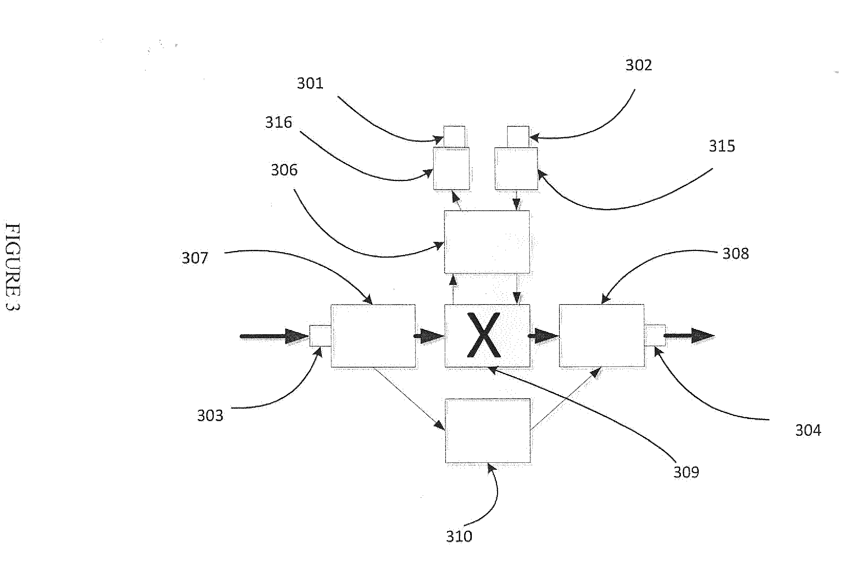

The second form of node 101 is shown in figure 3. Functional blocks 301 to 304 and 306 to 310 are identical to the blocks 201 to 204 and 206 to 210 of the previous node of figure 2. However, here the service mapping block 205 has been replaced by an input optical client port power control block 316 and an output optical client port power control block 315. In this type of node, a client's optical signals are taken directly into the optical layer with no electrical conversion. The power management blocks 315 and 316 are similar to the optical amplification control and measurement blocks 307 and 308, and serve to manage power, dispersion and bandwidth for a pure optical client entering the optical mesh of nodes.

It will be appreciated that a network may comprise entirely of the node type shown in figure 2, entirely of the node type shown in figure 3, or any combination of the two node types. An aspect of this network is that the optical paths traverse multiple nodes between client ports. On any link between nodes, there are optical channels that have end points that are not on the nodes at either end of the link, as well as optical channels that have end points that are on the nodes at either end of the link.

Figure 4 is a more detailed block diagram of the control plane of the node. For clarity purposes, the optical amplifiers have been omitted. The data plane path is shown from the input fibre port 401 to the output fibre port 402. The optical client ports have also been omitted for clarity. The optical switch fabric, 411, is at the centre of the data plane. Going from the input fibre port, which receives the optical control and data channels, a filter, 403, is used to extract the control channel. An aspect of this embodiment is that all of the managed nodes have the same optical control channel wavelength. The filter 403 drops the optical control channel to a power measurement block 404. The power measurement block 404 of this described embodiment uses a photodiode within an analogue amplifier connected to an analogue to digital convertor. This provides a digital power measurement which is passed to a control processor 407. The control processor 407 uses the received power input to adjust an optical attenuator 405 such that the received power is within the dynamic range of an optical receiver 413 to which it is coupled. A communications block 406 coupled to the optical receiver 413 extracts messages from the received optical control signal, and either forwards them to one or more optical output ports 402 for transmission, drops them to the control processor 407 or both. The communications block406 operates on rules based on the message type and address that are provisioned initially at start up by the control processor 407, then added to by protocol operated by the control processor 407 to build the topology of the network of nodes. Messages are sourced from the communications block 406 to a transmitter 408, which is tuned to the optical control channel wavelength. This is then merged with the data path channels in a combiner 409, so as to combine the data and control channels prior to transmission of the combined optical channels at the output fibre port 402. The power launched into the link 101 from the node is finally controlled by an optical attenuator 410.

The present invention provides a method of adjusting an operating parameter of each node in the network. The operating parameter of each node is adjusted by means of a series of steps which includes the step of deriving at each node optical impairment data for each link of the network based on the values of at least one characteristic associated with the operating parameter measured at the nodes in the network.

The invention will now be described with the aid of an embodiment in which the operating parameter being adjusted is the output power of a node. Furthermore, in the described embodiment of the invention, the characteristic associated with the output power of the node which is measured is the received power at each node, and the optical impairment data derived is the power loss. However, it will be appreciated that various other operating parameters could equally well be adjusted using the principles of the invention. Similarly, various other characteristics associated with the optical parameter could equally well be measured, as well as other optical impairment data could be derived either in addition to, or instead of, the power loss.

In the described embodiment of the invention, the power measured by the power measurement block 404 is used by the control processor 407 to measure the loss of the point to point link between its adjacent nodes. This is a local measurement. When the losses between all of the links in the network are known by the node, a calculation is made at the node to determine the required gain for each link in the network. The required gain is then realised by operating an amplifier of each node in saturation, then applying an attenuator to adjust to the required launch power for each node. This is a local adjustment and is carried out by the control processor 407 adjusting the fibre output power using the variable optical attenuator 410. In the described embodiment, this is an adjustment of the common mode output power of the data channels. It should further be noted that prior to the adjustment of the output power of each node, the network must have performed the provisioning of the control channel, followed by the generation by each node of the physical topology of the entire network, as discussed above.

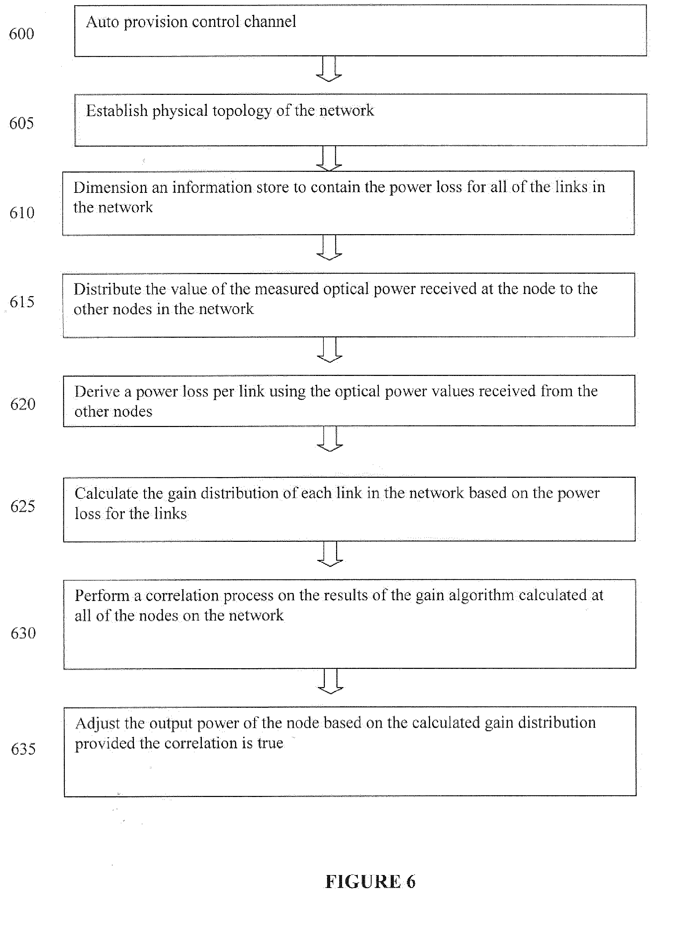

The main steps in the process flow of the present invention which is performed at each node in the network will now be described in more detail with reference to Figure 6. In step 600, it should be ensured that the control channel has been provisioned. This could be achieved for example by an auto-provisioning of the channel, which may be achieved by causing the control channel optical transmitter, for each optical fibre output of the node, to continuously transmit. Alternatively, the control channel optical transmitters periodically probe the output fibre ports with a transmission for a period designed to be long enough for the nodes at the other end of the link to detect the carrier presence, send a carrier true message on the return path to the source nodes and latch the control channel on.

Once the control channel has been established, the control processor on the now interconnected node uses a well understood discovery protocol to establish the physical topology of the network of nodes (step 605). It will be understood in this regard that the topology converges to the same network view at each node of the network. The converged topology is then used by the node to dimension an information store which is to contain the optical impairments for all of the links in the network which in the described embodiment corresponds to the power loss per link, for example in the form of a matrix (step 610). In step 615, the control processor 407 distributes to the other nodes in the network the optical power measured at each control channel measurement block 404 by means of a broadcast message. The optical power information received from the other nodes in the network is then used by the node in conjunction with the launch power at the other end of each link to derive a loss per link (step 620). , It should be understood that the node can detect that the information for the entire network of links is complete when its information store of the power loss for all of the links in the network is full, as the store has already been dimensioned from the converged network topology.

Once complete, the node performs an algorithmic calculation of the gain distribution on each link of the network (step 625).

In step 630, a correlation process is performed. This involves the node flooding the results of the gain algorithm to all of the other nodes. Accordingly, another adjustment store is dimensioned on each node and the complete set of adjustment calculation results from all of the nodes are then deterministically completely received at each node on the network. Provided the results of the algorithm from every node in the network correlate precisely, the node makes a local adjustment to its output power based on the gain distribution on each link as calculated by the algorithm (step 635). However, if this correlation is not true, then an adjustment of the output power of the nodes will not take place, as this signifies that information on the topology of the network is not yet complete at each node or an incorrect algorithm at a node. Accordingly, the correlation of each node's network wide view on the gain distribution on each link in the network renders the present invention inherently robust, as it significantly decreases the probability of an individual node making an incorrect or uncoordinated adjustment of its output power.

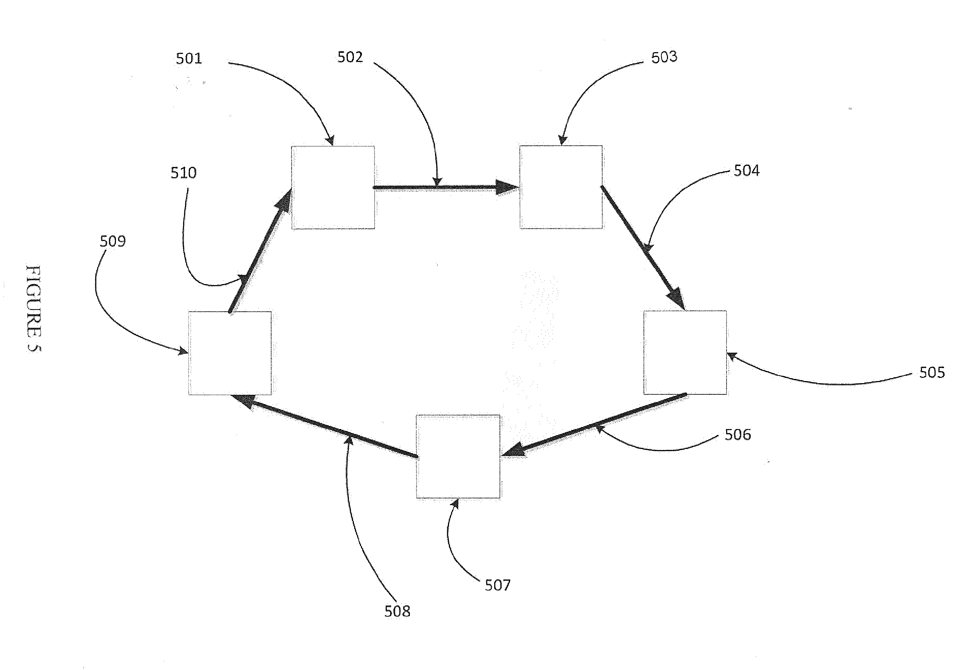

The step of the calculation of the gain distribution on each link in the network will now be described in more detail with reference to an examplary simple network shown in figure 5, which comprises five nodes, each having a single input fibre port and output fibre port such that the network is a closed unidirectional ring. The nodes are 501, 503, 505, 507 and 509. The links are 502, 504, 506, 508 and 510. In this example, each data path traversing one of the nodes can be provided with GdB of gain. Also, the control channel transmitter and receiver pairs have been designed to tolerate up to LdB of loss in each link. The control processors 407 at each node will derive the loss of each link in the network as well as the losses across the nodes themselves. The algorithm is accordingly adapted to determine again adjustment figure for each node such that the aggregate gain around the ring is 0dB, as to increase beyond this would may the ring to become optically unstable. This network functions when the link loss is less than LdB, and any one link loss can be compensated for by the gain attributed to the preceding links within the boundary of maintaining the net ring wide gain at or just below 0dB.

When each node has a completed information store of the power loss for all of the links on the network, the loss of each link will be given by L₅₀₂, L₅₀₄, L₅₀₆, L₅₀₈, and L₅₁₀ for each link. The algorithm can then calculate an adjustment A of the optical attenuator 410 on each node such that G(A₅₀₁+A₅₀₃+A₅₀₅+A₅₀₇+A₅₀₉)= L₅₀₂+ L₅₀₄+ L₅₀₆+ L₅₀₈+ L₅₁₀. This action of determining the adjustments in output power for all of the nodes is carried out on each node in the network. The adjustment for node 501 is therefore A₅₀₁ and similarly for node 507 is A₅₀₇. .

It will be appreciated that other optical impairment compensation, including but not limited to dispersion, could also be algorithmically determined using the nodally measured data deterministically distributed to all nodes using the topology dimensioned information model of the present invention. Furthermore, while the described embodiment of the invention has been illustrated with reference to a simple unidirectional ring, a skilled person will appreciate that the same principle could be applied to a mesh of nodes, i.e. distributing the power data to a defined network wide closed set of data, performing the algorithm on the network wide closed set of data, and then distributing the result from each node to all the nodes to determine that the network wide closed set of results precisely correlates. However, it will be appreciated that it may require a more sophisticated algorithm to determine the adjustments in output power for the nodes of a mesh network in comparison to a ring network. Similarly, the method can equally be applied for adjustments to compensate for other impairments, such as but not limited to dispersion in networks of arbitrary mesh topologies in addition to ring topologies.

It will be appreciated that the method of the present invention, wherein a network of optical nodes are managed as a single entity to control the optical parameters of the nodes, such as power, in a distributed manner has a number of advantages over the management of operating parameters by a centralised entity. Firstly, the verification that all of the nodes in the network have identical data for co-ordinating the application of adjustments to the operating parameters of the nodes is greatly simplified. Furthermore, as the co-ordination of the measurement of a characteristic associated with the operating parameter and the adjustment of the operating parameter is performed within the optical network itself, there is no reliance on an external overlay communications network to connect between the central controller and the nodes of the network. In particular, the present invention obviates the requirement to provision or define a special node allocated as master, to which the remainder of the nodes must be slaved. Thus, all of the nodes of the network have equal importance to the network, which inherently simplifies operations and maintenance on the network. The correlation of the results of the gain algorithm also provides a simple but highly effective means of determining that the adjustments to be applied on each node are suitably coordinated. This ensures that any single node cannot make an anomalously incorrect or uncoordinated adjustment, which could cause optical path failures in sections not localised to the node making the adjustment.

A further advantage of the present invention is that nodes may be added and subtracted from the network with no need for central co ordination and synchronisation. This is because the generation by each node of the physical topology of the entire network can be used to update the optical control parameters and re converge the optical infrastructure to a new state as a result of either the addition or subtraction of one or more nodes from the network. The method of the invention also results in a robust network in the presence of a node that is added with an incorrect algorithm, or a node that is corrupt, as the correlation step will prevent the nodes, and specifically the corrupt node, from making adjustments.

Another aspect of the present invention is that all of the steps of the invention may be carried out continuously in the background. This allows the network to continuously adjust to environmental changes, such as but not limited to, the aging of the optical fibre and the optical components connected to the fibre.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method for adjusting an operating parameter of a node in an optical network which comprises a plurality of nodes, the method comprising the steps of:
measuring at the node a value of at least one characteristic associated with the operating parameter of the node;
distributing the value of the characteristic to all of the other nodes in the network;
receiving at the node the value of the characteristic for all of the other nodes in the network;
deriving at the node optical impairment data for each link of the network based on the received values of the characteristic for all of the nodes;
calculating at the node the preferred value of the operating parameter for each node based on the derived optical impairment data; and
adjusting the operating parameter of the node based on the calculated preferred value for the node.

2. The method of claim 1, further comprising the step of only adjusting the operating parameter of the node provided the preferred values of the operating parameters for all of the nodes on the network calculated by each node correlate.

3. The method of claim 2, further comprising the steps of:
establishing at the node the topology of the network, and
determining whether the preferred values of the operating parameters for all of the nodes in the network calculated by each node correlate through the use of the established network topology.

4. The method of any of the preceding claims, wherein the step of distributing the value of the characteristic to all of the other nodes in the network comprises the step of transmitting a broadcast message including this value over the control channel of the optical network.

5. The method of any of the preceding claims, wherein the step of receiving at the node the value of the characteristic for all of the other nodes in the network comprises the step of receiving over the control channel a broadcast message from each node in the network, the broadcast message containing the value of the characteristic.

6. The method of any of the preceding claims, wherein the operating parameter is the output power.

7. The method of claim 6, wherein the characteristic associated with the output power is the received power at the node.

8. The method of claim 7, wherein the step of deriving at the node optical impairment data for each link of the network comprises calculating the power loss of each link of the network.

9. The method of claim 8, further comprising storing locally at each node the power loss for each link of the network.

10. The method of any of the preceding claims, wherein the preferred value of the operating parameter for each node is calculated using the same algorithm at each node in the network.

11. The method of claim 10, wherein the preferred value of the output power for each node is based on an algorithm whereby the sum of the values by which the optical attenuators of all of the nodes are to be adjusted times the gain is equal to the total power loss of each link in the network

12. The method of any of claims 6 to 11, wherein the calculation at the node of the preferred value of the output power for each node compensates for dispersion and maximises the signal to noise ratio in the optical network.

13. The method of any of claims 6 to 12 wherein the adjustment in the output power comprises an adjustment in the common mode output power of the optical data channels.

14. The method of any of the previous claims, further comprising the initial step of auto provisioning the control channel of the optical network prior to measuring the value of the characteristic associated with the operating parameter of the node.

15. The method of any of the previous claims, wherein the method is executed periodically to maintain the optical configuration or performance of the network.

16. The method of any of claims 1 to 14, wherein the method is executed continuously to maintain the optical configuration or performance of the network.

17. A apparatus for adjusting the operating parameter of a node in an optical network which comprises a plurality of nodes, the apparatus comprising:
means for measuring at the node a value of at least one characteristic associated with the operating parameter of the node;
means for distributing the value of the characteristic to all of the other nodes in the network;
means for receiving at the node the value of the characteristic for all of the other nodes in the network;
means for deriving at the node optical impairment data for each link of the network based on the received values of the characteristic for all of the nodes;
means for calculating at the node the preferred value of the operating parameter for each node based on the derived optical impairment data; and
means for adjusting the operating parameter of the node based on the calculated preferred value for the node.
